# EUROPEAN PATENT APPLICATION

(11) **EP 4 310 274 A1**
(43) Date of publication of application: **24.01.2024**
(21) Application number: 22186306.1
(22) Date of filing: 21.07.2022
(51) Int. Cl.: E04H 5/02, F03D 9/10

(54) **COUPLING ASSEMBLY FOR MACHINE ENCLOSURES**

(71) Applicant: H2Dock BV, 1961 NH Heemskerk (NL)
(72) Inventor: Mulder, Louis Henri Denis, 1217 BT Hilversum (NL); Witte, Johannes Hendricus, 2111BN AERDENHOUT (NL)
(74) Representative: De Vries & Metman

(57) **Abstract**

Coupling assembly (10) for coupling a machine enclosure (1) to a support, such as a second machine enclosure. The coupling assembly comprises a first coupling frame (3) configured to be connected to the support, and a second coupling frame (9) configured to be mounted to a surface of the machine enclosure, the first and second coupling frames having matching coupling interfaces. The two coupling frames have one or more passages (35, 36), such as a manhole and/or cable passage and/or duct passage, which are aligned when the two coupling frames are coupled. The coupling assembly forms a modular coupling interface for machine enclosures or containers to form a modular building system, e.g., for an offshore production facility of a fuel such as hydrogen.

## Description

The present disclosure relates to system for coupling machine enclosures to provide a modular building system, e.g., of an onshore or offshore production facility, for example for the production of hydrogen, ammonia or other non-fossil fuels, e.g., in an offshore wind turbine park.

Energy generated by offshore wind turbine parks is difficult to store, production fluctuates resulting in strong fluctuations of the grid load. Long distance transport of the generated electricity to onshore sites requires expensive cable infrastructure and causes significant transport losses. To solve these problems, wind parks can be provided with facilities for the production of so-called green hydrogen by electrolysis of purified seawater, or the production of ammonia or other non-fossil fuels.

Hitherto, such production facilities typically comprise a number of containers arranged side by side or on top of each other, where necessary linked by access points, pipes and cables. Maintenance of such facilities is rather expensive, also in view of the difficult offshore environment and the safety of expensive equipment and maintenance staff.

It is an object of the invention to provide a system for building a production facility in an efficient, robust and safe manner.

The object of the invention is achieved with a coupling assembly for coupling a machine enclosure to a support, such as a second machine enclosure, a ground floor, a wall or the roof of a hub or base station. The coupling assembly comprises a first coupling frame configured to be connected to the support, and a second coupling frame configured to be mounted to a surface of the machine enclosure.

Such coupling assemblies can be mounted to machine enclosures of any desired type to provide a modular interface enabling the use of the machine enclosures as interchangeable building units of a modular building system, in particular as a housing for a technical processing facility, such as a production plant for a non-fossil fuel, such as hydrogen or ammonia.

The machine enclosure can be coupled to a bottom surface by providing a first frame part as a dock to a bottom surface. This way, the transport container can be coupled to the bottom in the very same manner as when it is coupled to a lower machine enclosure in a stack. This provides a standardized and modular docking system and facilitates easy, robustly and safely building of a production facility.

In a specific embodiment, the first and second coupling frames have one or more passages, in particular closable or sealable passages, such as a manhole and/or cable passage and/or duct passage. The passages of the first coupling frame can be configured to be aligned with the passage of the second coupling frame when the two coupling frame parts are coupled.

In a specific embodiment, the first coupling frame fits into a receiving cavity of the second coupling frame. In such a male - female configuration, the first coupling frame is a male coupling frame and the second coupling frame is a female coupling frame.

In a more specific embodiment, the first or male coupling frame has a circumferential wall which is inwardly inclined in a direction away from the associated machine enclosure, e.g., so as to form a trapezoid outline in side view. The circumferential wall matches the circumferential inner wall of the receiving cavity of the second or female coupling frame. The tapered trapezoid geometry of the male coupling frame guides the second or female coupling frame during coupling. This is allows proper positioning, even at difficult weather conditions.

A clearance can be maintained, e.g., of about 2 - 3 cm, to be closed with one or more seals. Such a clearance helps to reduce the risk of damage and prevents that, in a vertical arrangement, weight load is transferred from the upper container to the lower container via the coupling frames.

The circumferential wall of the second coupling frame can be used to provide various utilities, such as leakage detectors, sensors, a camera, fire extinguishers, communication modules, mountings for piping, fittings for lightings, provisions for ventilation, and/or electric sockets.

Other coupling configurations can be used, instead of a male - female coupling, or in addition thereto. For example, a magnetic coupling can be used.

The coupling assembly can be used with a machine enclosure comprising at least one side face with an opening and a first or second coupling frame of the coupling assembly, mounted to the edges of said opening. More specifically, the machine enclosure can comprise a first surface with a first coupling frame and an opposite second surface comprising a second coupling frame. The first coupling frame can for example be mounted to an edge of an opening in the bottom surface of the interior of the machine enclosure, whereas the second coupling frame is mounted to the edge of an opening in the outside top surface of the machine enclosure. Alternatively, or additionally, the first coupling frame can be mounted to an edge of an opening in a first side face of the interior of the machine enclosure, whereas the second coupling frame is mounted to the edge of an opening in the outside surface of an opposite side face of the machine enclosure. This allows coupling of the machine enclosures is a horizontal plane.

The first and second coupling frames can for example be mounted centrally to the respective surface of the machine enclosure. Alternatively, or additionally, the machine enclosure may have an aligned set of first and second coupling frames at a distance from its centre line, in particular if the machine enclosure has more than one set of first and second coupling frames.

The machine enclosure can furthermore comprise ridges on the first surface with the first coupling frame and gutters on the opposite second surface, aligned with the ridges and configured to receive ridges of an identical machine enclosure This contributes to proper guidance and alignment of the machine enclosures during coupling. To this end, the ridges and the gutter can have an inverted V-shaped outline in cross section. The V-shape of the gutters is preferable of a wider angle than the V-shape of the ridges, so as to provide a clearance gap.

Guiding in a different horizontal direct can be obtained if the ridges have inclined flanges at their terminal ends, the flanges diverging in upward direction.

The disclosure also pertains to a machine enclosure, optionally as disclosed above, comprising one or more slider platforms movable between an operational position within the machine enclosure and an assembly position outside the machine enclosure. In a factory, the slider platforms can be moved outside the machine enclosure and equipment and subsystems can be mounted on the platform. After mounting the equipment, the slider platforms can be moved back into the machine enclosure, e.g., for further preparation and/or testing before transport to a building site. The slider platforms can for example be movable along a rail guide or other type of guide. In a specific embodiment, the machine enclosure comprises two slider platforms, i.e., one at either side of the second coupling frame.

The disclosure also pertains to a machine enclosure, optionally as disclosed above, comprising one or more removable walls, e.g., two opposite removable walls, e.g., end walls comprising releasable fasteners for fixating the end walls in a position closing off the machine enclosure. The removable walls may be in line with a moving direction of the slider platforms. In such case, the removable walls can removed to allow the slider platforms to move to the assembly position outside the machine enclosure. Optionally, the fasteners are less explosion proof than the main structure of the machine enclosure, i.e., the assembled structure of the walls, bottom and roof of the machine enclosure without the removable wall or walls. In case of an explosion, the side walls are blown off from the main structure, reducing damage to the main structure and reducing the risk of damage of coupled machine enclosures or other adjacent structures.

The machine enclosures can be standard shipping containers, such as 20 ft or 40 ft sea containers, or any standard or non-standard container for safely housing equipment, such as electrolysers, compressors, equipment for desalinating, purifying and deionizing sea water, and/or storage tanks. The machine enclosure will typically be a stackable, e.g., cuboid storage unit with an accessible interior space and a closable access port.

A modular building system for building a production facility can be provided comprising a set of interchangeable machine enclosures as described above. Equipment, such as electrolysers and compressors, can be built into the machine enclosures at a factory or similar assembly site and tested. Subsequently, the machine enclosures can be transported, e.g., by truck or by ship, to the building site to build the desired production facility.

In addition, the building system may further comprise a hub or base station with a roof provided with one or more first coupling frames. The building system may also comprise hydrogen storage tanks provided with a first and/or second coupling frames and/or further functional modules comprising a modular interface compatible with the coupling assembly of the present invention.

In this context, a modular system is understood to mean a building system based on interchangeable building units or modules, each providing a modular interface allowing to link the building unit or module to any other one of the building units or modules in the same manner enabling assembly of a variety of arrangements.

The system of the present invention is particularly useful for building an offshore facility for the production of a non-fossil fuel, such as hydrogen and/or ammonia, but can also be used for other offshore or onshore facilities, such as for gas or oil industry.

The above-described aspects will hereafter be explained in more detail with reference to the drawings.
Figures 1-8: show consecutive steps of the process of preparing machine enclosures and their subsequent use for building an offshore production facility;
Figure 9: shows an alternative embodiment of a production plant comprising a modular set of machine enclosures according to the invention;
Figures 10A-B: show a stack of two machine enclosures according to the invention;
Figure 11: shows the stack of Figures 10A-B with locks;
Figure 12: shows in exploded view an exemplary embodiment of a coupling assembly of the present invention;
Figure 13: shows two machine enclosures provided with the coupling assembly of Figure 12;
Figure 14: shows vertical coupling of two machine enclosures;
Figure 15: shows an alternative embodiment of a set of machine enclosures according to the invention;
Figure 16: shows further alternative embodiment of a set of coupled machine enclosures according to the invention.

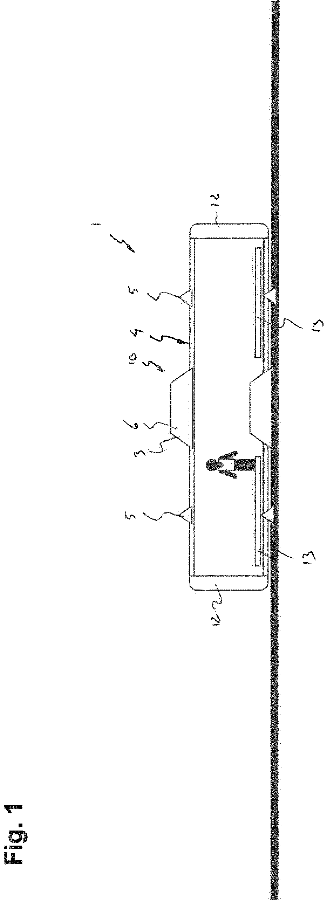

Figure 1 shows a schematic representation of a machine enclosure 1 in a factory. The machine enclosure 1 can for example be a standard 40 ft shipping container or any other type of stackable and accessible container. In Figure 1, a first coupling frame 3 is mounted centrally on a top surface 4 of the machine enclosure 1, centrally between two upwardly pointing ridges 5. The first coupling frame 3 is rectangular or square in top view and tapers upwardly in side view. The outer wall 6 of the first coupling frame 3 surrounds one or more closable passages, such as a manhole and/or passages for cables or ducts, and mounts for various facilities, as described hereafter.

A second coupling frame 9 is mounted to a bottom side of the machine enclosure 1, projecting into the interior of the machine enclosure 1. The second coupling frame 9 is aligned with the first coupling frame 3 and surrounds a cavity 11 configured to receive a matching first coupling frame 3 of an identical second machine enclosure. The first coupling frame 3 and the second coupling frame 9 jointly form a coupling assembly 10.

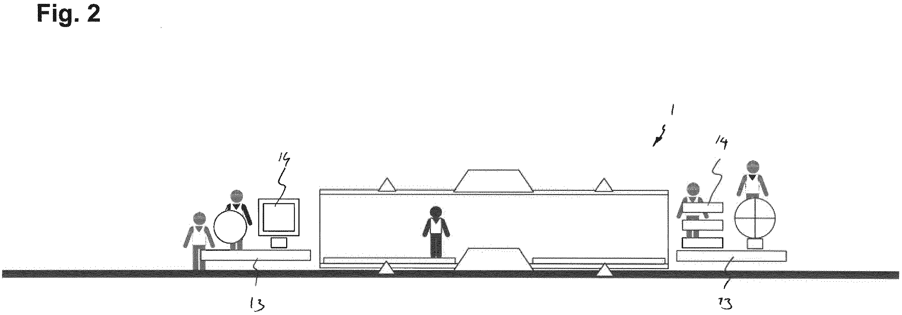

The machine enclosure 1 further comprises two opposed removable end walls 12. A slider platform 13 is provided at the bottom surface of the machine enclosure 1 at either side of the second coupling frame 9. The slider platforms 13 can be moved between an operational position within the machine enclosure 1, as shown in Figure 1, and an assembly position outside the machine enclosure 1, as shown in Figure 2.

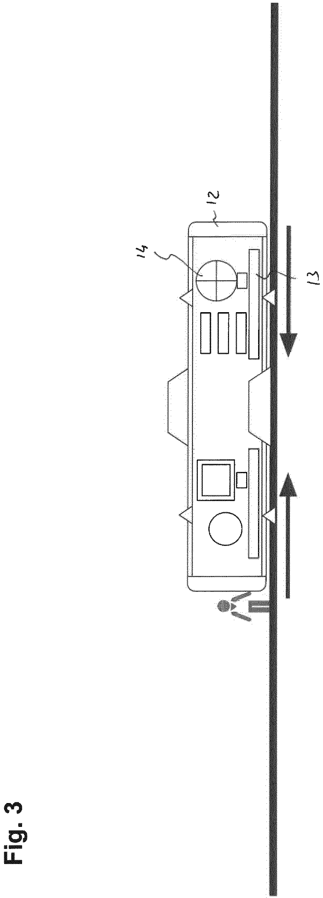

When the machine enclosure 1 is still within the factory, the removable end walls 12 are removed and the slider platforms 13 are moved to the assembly position, so the desired equipment and subsystems 14 can be installed on the slider platforms 13. After installation of the equipment and subsystems 14, the slider platforms 13 are moved back inward to the operational position and the end walls 12 are put back in place (Figure 3). The equipment and subsystems 14 may for example include an electrolyser, a compressor, a communication module for remote control and monitoring of the production facility in operation.

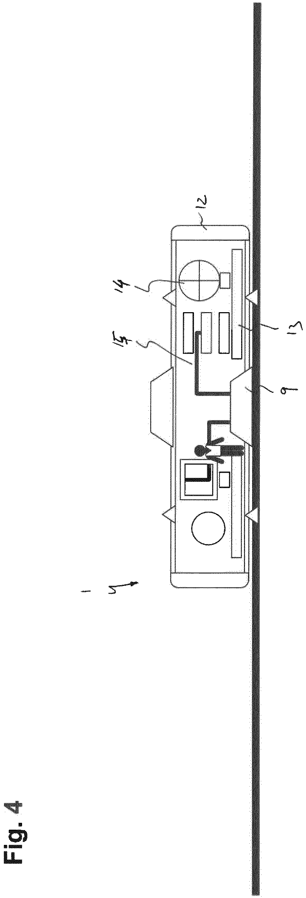

In a next step, shown in Figure 4, cables and ducts 15 from the equipment and subsystems 14 can be connected to the second coupling frame 9, so they can be connected to equipment or subsystems 14 in a coupled machine enclosure 1 or to feed lines present at the final destination site. After completing the installation, the equipment and subsystems 14 can be tested in the factory.

The machine enclosure 1 can then be transported, e.g., by ship or by truck. On a ship, a number of machine enclosures 1 can be stacked.

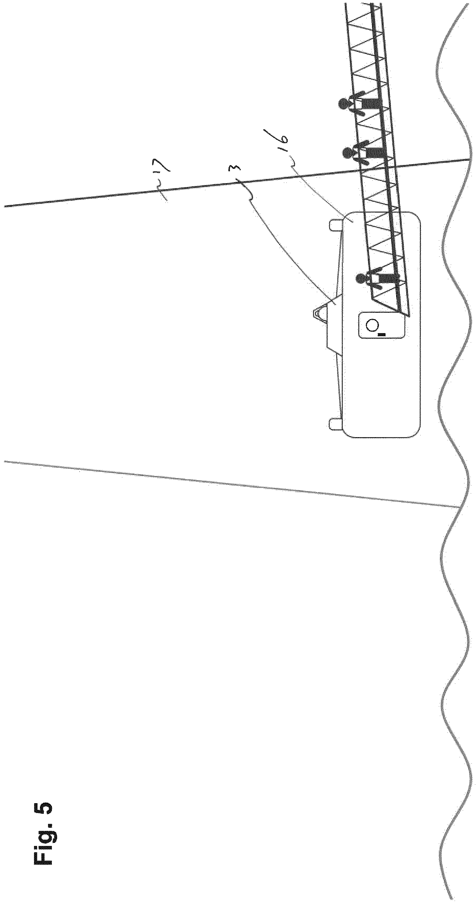

Figure 5 shows a schematic representation of a base station 16 on a monopile 17 of an offshore wind turbine. The base station 16 includes an accessible housing with an access port 18 and a roof 19 provided with a first coupling frame 3 as described above. Personnel can enter the base station 16 to prepare connection to a machine enclosure 1 to be stacked upon the base station 16, e.g., by connecting the required cables and ducts to the first coupling frame 3 on top of the base station 16.

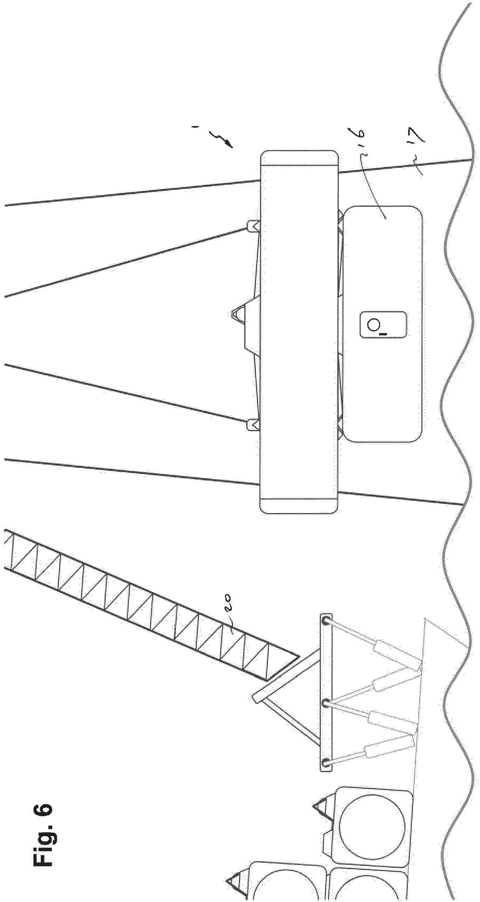

A crane 20 on a ship 21 (see Figure 6) lifts the machine enclosure 1 from the ship 21 and positions it on the roof 19 of the base station 16 such that the first coupling frame 3 of the base station 16 is received within the matching cavity 11 of the second coupling frame 9 of the machine enclosure 1 (Figure 6) to jointly form a coupling assembly 10 according to the present invention.

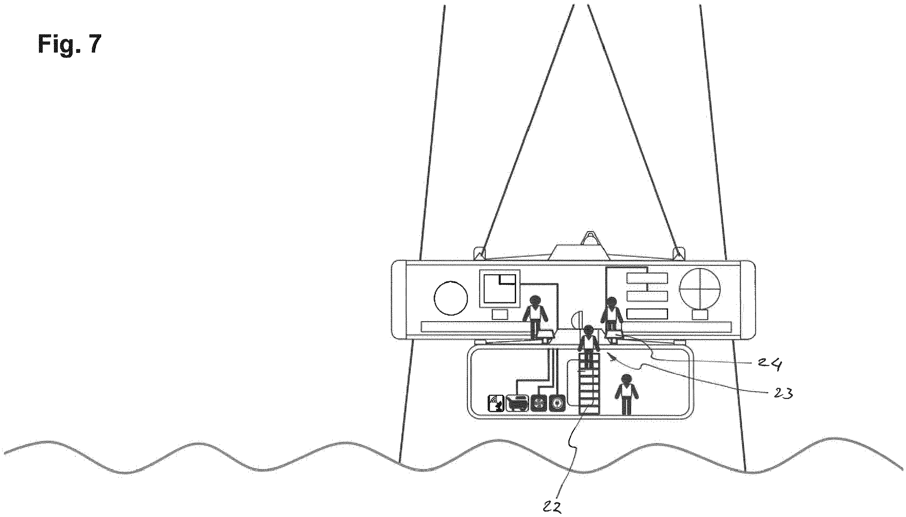

The first coupling frame 3 comprises a foldable ladder 22 (Figure 7) and a closable manhole 23. After the machine enclosure 1 is placed on top of the base station 16, the manhole 23 can be opened and the ladder 22 can be unfolded to allow access of an operator from the base station 16 to the machine enclosure 1. The operator can climb the ladder 22 and enter the machine enclosure 1, e.g., to secure the connection between the first coupling frame 3 of the base station 16 and the second coupling frame 9 of the machine enclosure 1 by means of locks 24.

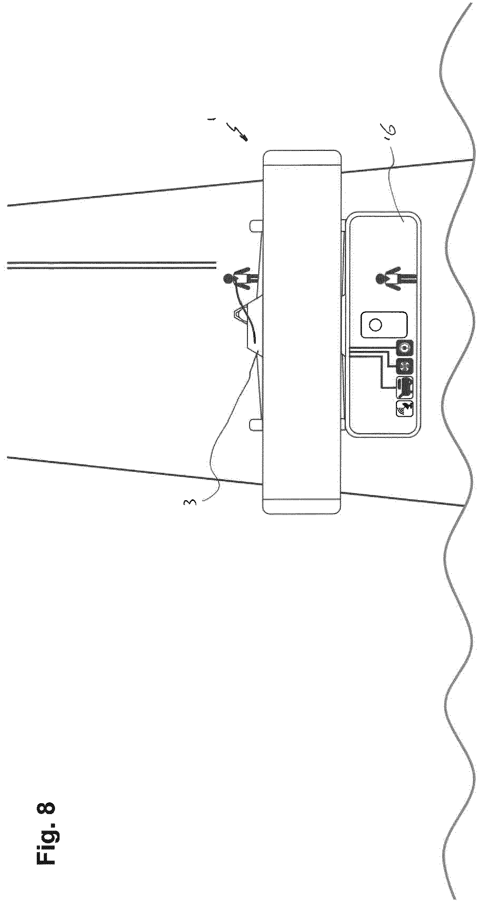

In a next step, the operator can unfold the ladder of the first coupling frame 3 of the machine enclosure 1 and climb onto the roof of the machine enclosure 1 via the manhole of the first coupling frame 3, to detach the cables of the crane (Figure 8). Upon return in the machine enclosure 1 the operator can take all required measures to activate the equipment in the machine enclosure 1.

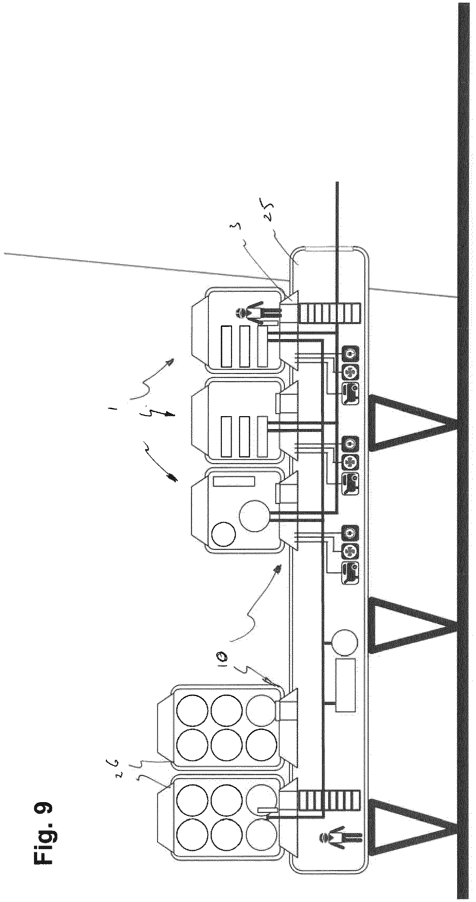

Optionally, the location can have more than one base station 16 suitable for stacking one or more machine enclosures 1 to build a production facility. Alternatively, the machine enclosures 1 can be stacked on a range of structures, including but not limited to monopiles, floating foundations or a hub platform 25 having a row of first coupling frames 3 on its top surface allowing a number of machine enclosures 1 to be placed side by side. An example of such an embodiment is shown in Figure 9.

Besides machine enclosures 1, the system may also comprise storage containers 26 with the same modular interface provided by the coupling assembly 10. The system may also include larger machine enclosures 1 with a corresponding modular interface, e.g., having two or more first coupling frames 3 at its top side and having the same number of second coupling frames 9 at its lower side.

To allow maintenance, the machine enclosures 1 can be switched to service mode, so as to unlock the hatch of the manhole, start ventilation, adjust air pressure and provide the right conditions for human presence. Service mode can be started via a central monitoring and control system for a larger number of production facilities.

The machine enclosures 1 can be unlocked and, if necessary, replaced with a new machine enclosure 1.

The machine enclosure 1 can be designed to minimize the risk of fire. In case of fire in one of the machine enclosures 1, the production facility can be shut down automatically. The machine enclosure 1 can for example be provided with automatic fire extinguish equipment. If the machine enclosure 1 is seriously damaged by the fire, it can be replaced.

After installing the equipment 14 in the factory, as described above, the removable end walls 12 are put back in place and secured in such a manner that the end walls 12 are blown out in case of an explosion. This can help to prevent damage of the other machine enclosures 1 of the production facility.

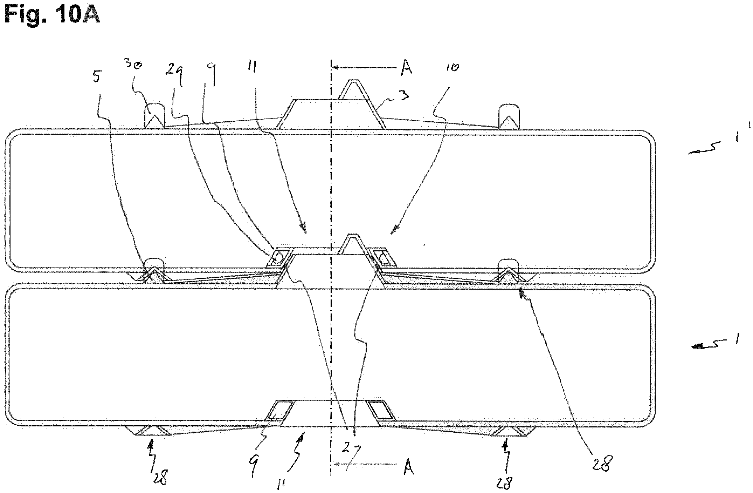

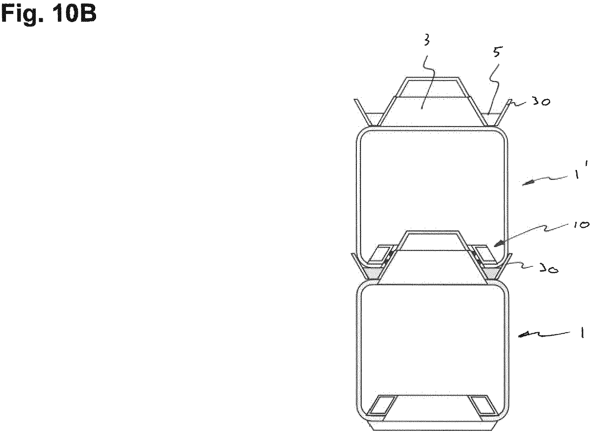

Figure 10A shows two stacked machine enclosures 1 in a longitudinal cross section. Figure 10B shows the same stack in a cross section along line A-A in Figure 10A. The two machine enclosures 1 are identical and have a first coupling frame 3 centrally at a top side of the machine enclosure 1 and a second coupling frame 9, as described above.

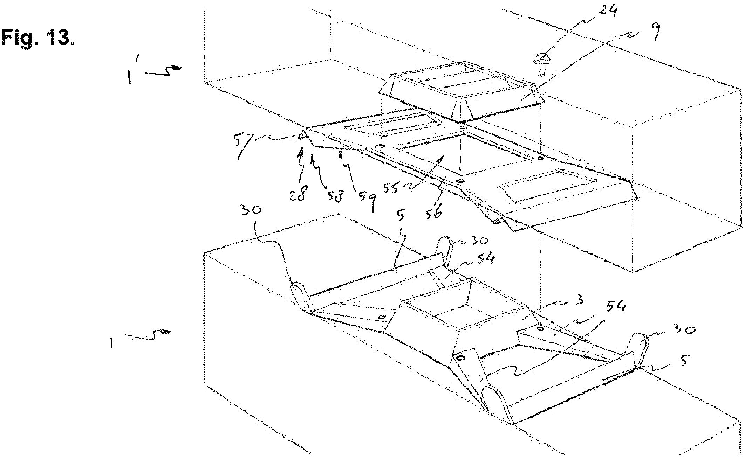

The first coupling frame 3 of the lower machine enclosure 1 is received in the cavity 11 of the second coupling frame 9, e.g., with a clearance of about 2 - 3 cm, to form a coupling assembly 10 of the present invention. Flexible seals 27 are used to seal the clearance gap. Similarly, the ridges 5 are received in matching gutters 28 at the lower surface of the upper machine enclosure 1. As shown in Figure 10B, the ridges 5 have outer ends provided with inclined flanges 30 (see also Figure 13). The inclined flanges 30, the receiving cavities 11 and the gutters 28 guide positioning of the upper machine enclosure 1 during stacking and allow accurate positioning even with strong winds or sea motion that may prevail at offshore locations.

The second coupling frame 9 has a double wall, which may for example encase lighting units 29.

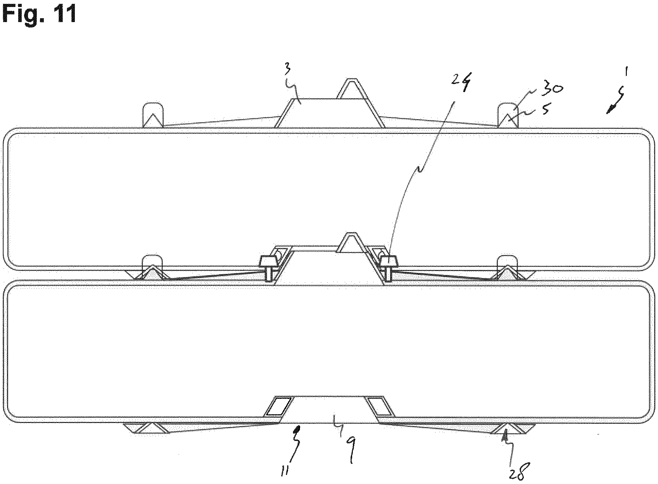

After stacking, the connection between the first coupling frame 3 of the lower machine enclosure 1 and the second coupling frame 9 of the upper machine enclosure 1 is secured by means of locks 24 (Figure 11).

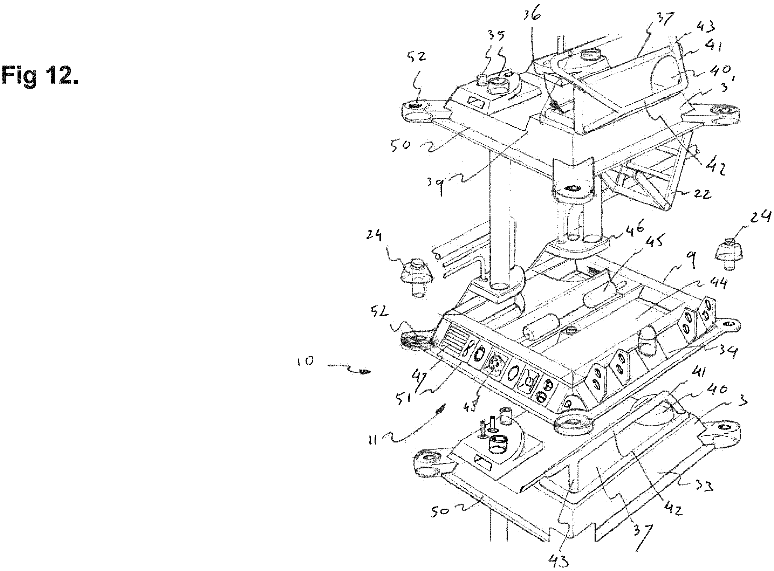

Figure 12 shows an embodiment of a coupling assembly 10 in more detail. The coupling assembly 10 comprises a first coupling frame 3 bordering an opening in the top surface of a lower machine enclosure 1, and a second coupling frame 9 surrounding an opening in the bottom surface at the interior side of an upper machine enclosure 1. Figure 12 also shows the first coupling frame 3' of the upper machine enclosure 1 for engaging the second coupling frame 9 (not shown) of a next higher machine enclosure 1 in the stack.

In the shown embodiment, the second coupling frame 9 has a receiving cavity 11 at its bottom side. The first coupling frame 3 fits into the receiving cavity 11 of the second coupling frame 9, forming a matching fit with a sealable clearance.

In the shown embodiment, the first coupling frame 3 has a circumferential wall 33 having four wall sections defining a rectangular, e.g., square outline in top view. The circumferential wall 33 is inwardly inclined in a direction away from the associated machine enclosure 1 so as to define a trapezoid side view. The second coupling frame 9 has a corresponding geometry defining the receiving cavity 11 at its lower side.

The first coupling frame 3 comprises a number of passages 35 for cables and ducts, and a manhole 36 closable with a hatch 37 and having a foldable ladder 38. The manhole 36 is within a raised part 39 of the top surface of the first coupling frame 3. The hatch 37 is pivotally attached to the circumferential wall 33 and comprises a dome shaped window 40 allowing an operator check the situation at all sides before opening the hatch 37. During placement of a machine enclosure, an operator can look through the window dome to monitor correct positioning of the machine enclosure. The hatch 37 also carries a bar frame 41 comprising a horizontal longitudinal bar 42 supported by four legs 43 connecting the longitudinal bar 42 to the respective corner points of the hatch 37. Opposite the pivoting side of the hatch 37, the legs 43 of the bar frame 41 extend to the lower surface adjacent the raised part 39 of the top surface. This bar frame 41 helps to guide an engaging second coupling frame 9 during stacking of the respective machine enclosures 1, and protects an operator from potential injury caused by incorrect positioning of a machine enclosure. In a specific embodiment, opening hatch 37 pulls out a foldable protection screen (not shown).

The second coupling frame 9 comprise a manhole 44 which is aligned with the manhole 36 of the first coupling frame 3 when the first coupling frame 3 is received in the receiving cavity 11 of the second coupling frame 9. A number of utilities can be integrated in the circumferential wall 34 of the second coupling frame 9, such as leakage detectors, sensors (e.g., for temperature, relative humidity, air pressure, etc), a camera, fire extinguishers 45, communication modules (e.g., for offshore satellite connection), mountings for piping 46, fittings for lightings, provisions for ventilation 47, and electric sockets 48.

The first coupling frame 3 has a flanged lower end 50 welded to the edges of the opening in the top surface of the respective machine enclosure 1. The second coupling frame 9 has a similar flanged lower end 51 welded to the edges of the opening in the bottom surface of the respective machine enclosure 1. The welded flanged edges 50, 51 have corners with eyelets 52 for the locks 32. The locks 32 can be equipped with integrated lock / unlock detection sensors.

Figure 13 shows a lower machine enclosure 1 provided with a first coupling frame 3 on its top surface and an upper machine enclosure 1' with a second coupling frame 9 on the interior side of the bottom of the machine enclosure 1'.

At either side of the first coupling frame 3 is a ridge or beam 5 with an upwardly pointing cross section. The two beams 5 are parallel and extend in a width direction of the machine enclosure 1. The terminal ends of the beam 5 are provided with the inclined flanges 30 diverging in upward direction. The inclined flanges 30 at one side of the first coupling frame 3 are parallel to the inclined flanges 30 at the other side of the first coupling frame 3. Tapered beams 54 extend between each corner of the first coupling frame 3 to the nearest inclined flange 30.

The second coupler frame 9 of the upper machine enclosure borders an opening 55 in the bottom of the upper machine enclosure 1' allowing passage of the first coupler frame 3 of the lower machine enclosure 1 into the receiving cavity 11 of the second coupler frame 9 when the two machine enclosures 1, 1' are stacked. A reinforcement plate 56 extends from both sides of the second coupler frame 9. The reinforcement plate 56 is profiled to have a geometry matching with the geometry of the ridges 5, inclined flanges 30 and tapered beams 54 of the lower machine enclosure 1. More specifically, the reinforcement plate 56 has two parallel side edges 57 folded to form the gutters 28 fitting over the upwardly pointing ridges 5. Terminal ends of the folded side edges 58 are chamfered to optimize guiding by the inclined flanges 30. Between the folded side edges 57 and the second coupling frame 9, the lower side of the reinforcement plate 56 has sloping load transfer surfaces 59 following the geometry of the tapered beams 54.

When the upper machine enclosure 1' is positioned on top of the lower machine enclosure 1, the inclined flanges 30 guide the upper machine enclosure 1' in a transversal horizontal direction while the ridges 5 guide movement of the upper machine enclosure 1 in a longitudinal horizontal direction when the gutters 28 of the reinforcement plate 56 are positioned over the ridges 5. This contributes to a very accurate positioning op the upper machine enclosure 1', even with rough weather conditions. After positioning, the shaped lower side of the reinforcement plate 56 rests on the tapered beams. Weight load of the upper machine enclosure 1' is transferred to the lower machine enclosure 1 via the load transfer surfaces 59 of the reinforcement plate 56 and the tapered beams 54. No loads are transferred via the first and second coupling frames 3, 9, which are spaced by a clearance gap.

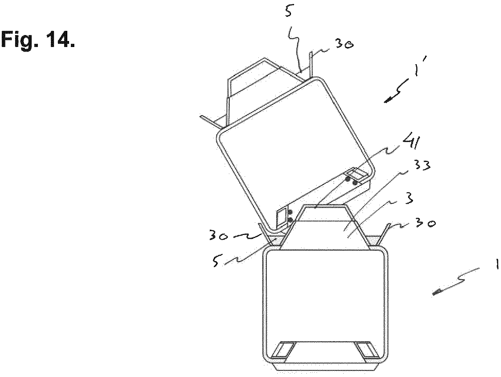

Figure 14 shows how the trapezoid outline of the circumferential wall 33, the inclined flanges 30 and the bar frame 41 of the first coupling frame 3 functions as a guide during stacking of the machine enclosures 1', 1. Sea swell and weather conditions at offshore locations complicate accurate aligning of parts. The guiding geometry of the coupling frame parts 3, 9 facilitates proper alignment and positioning in a wide weather window.

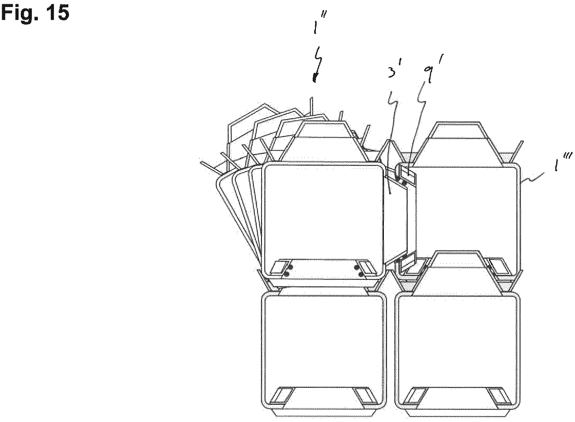

The coupling assembly 10 can also be used for horizontal coupling. Figure 15 shows a machine enclosure 1'' comprising a first coupling frame 3' mounted to a side wall of the machine enclosure 1" and coupled to a second coupling frame 9' mounted to a side wall of a coupled second machine enclosure 1‴.

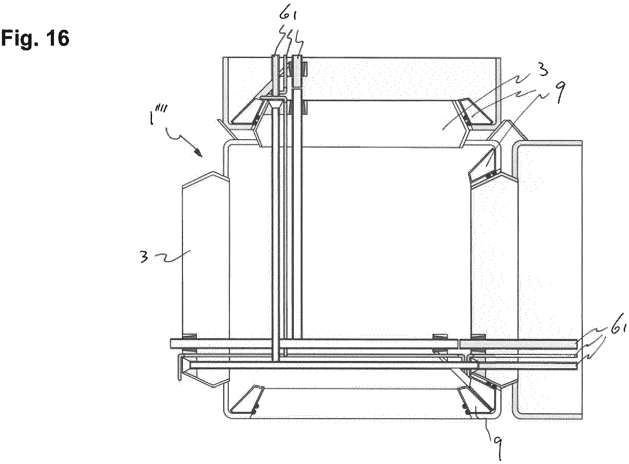

Figure 16 shows a further example of a machine enclosure 1 having a first coupling frame 3 at its top side and a second coupling frame 9 at its bottom side for vertical coupling, and having a first coupling frame 3 at one side wall and a second coupling frame 9 at its opposite side wall for horizontal coupling. Cables and ducts 61 pass from one machine enclosure to a next one via respective cable passages and duct passages in the first and second coupling frames 3, 9.

It is noted that the drawings are schematic, not necessarily to scale and that details that are not required for understanding the present invention may have been omitted. The terms "upward", "downward", "below", "above", and the like relate to the embodiments as oriented in the drawings.

The disclosure is not restricted to the above described embodiments which can be varied in a number of ways within the scope of the claims.

## Claims

1. Coupling assembly (10) for coupling a machine enclosure (1) to a support, such as a second machine enclosure, a ground floor, or the roof of a hub or base station, the coupling assembly comprising:
- a first coupling frame (3) configured to be connected to the support;
- a second coupling frame (9) configured to be mounted to a surface of the machine enclosure, the first and second coupling frames having matching coupling interfaces;
wherein the first and second coupling frames have one or more passages (35, 36), such as a manhole and/or cable passage and/or duct passage, wherein the one or more passages of the first coupling frame (3) are configured to be aligned with the passage of the second coupling frame (9) when the two coupling frames are coupled.

2. Coupling assembly according to claim 1, wherein the first coupling frame (3) fits into a receiving cavity (11) of the second coupling frame (9).

3. Coupling assembly according to claim 2, wherein the first coupling frame (3) has a circumferential wall (33) which is inwardly inclined in a direction away from the associated machine enclosure (1) and which matches the circumferential inner wall of the receiving cavity (11) of the second coupling frame (9).

4. Coupling assembly according to claim 3, wherein the circumferential wall of the second coupling frame comprises utilities, such as leakage detectors, sensors, a camera, fire extinguishers (45), communication modules, mountings for piping (46), fittings for lightings, provisions for ventilation (47), and/or electric sockets (48).

5. Machine enclosure comprising at least one side face with an opening and a first or second coupling frame of the coupling assembly of any one of the preceding claims, mounted to the edges of said opening.

6. Machine enclosure according to claim 5, comprising a first surface with a first coupling frame and an opposite second surface comprising a second coupling frame.

7. Machine enclosure according to claim 6, wherein the first coupling frame is mounted to an opening in the bottom surface of the machine enclosure, the second coupling frame is mounted to an opening in the top surface of the machine enclosure.

8. Machine enclosure according to claim 6 or 7, wherein the first and second coupling frames are mounted centrally to the respective surface of the machine enclosure.

9. Machine enclosure according to any one of the preceding claims 6 - 8, comprising ridges (5) on the first surface with the first coupling frame (3) and gutters (28) on the opposite second surface, aligned with the ridges (5) and configured to receive ridges (5) of an identical machine enclosure (1).

10. Machine enclosure according to claim 9, comprising inclined flanges (30) at the terminal ends of the ridges 5, the flanges diverging in upward direction.

11. Machine enclosure according to any one of the preceding claims 5 - 10, comprising at least one, e.g., two slider platforms (13), e.g., at either side of the coupling frame part (9), the at least one platform being movable, for example along a rail guide, between an operational position within the machine enclosure (1) and an assembly position outside the machine enclosure (1).

12. Machine enclosure according to any one of the preceding claims comprising two opposite removable walls, e.g., end walls (12) comprising releasable fasteners for fixating the end walls in a position closing off the machine enclosure (1), the fasteners preferably being less explosion proof than the main structure of the machine enclosure.

13. Machine enclosure according to any one of the preceding claims 5 - 12, wherein the machine enclosure is a standard container, e.g., a shipping container.

14. Modular building system for building a production facility, the system comprising a set of interchangeable machine enclosures according to any one of claims 5 - 13.

15. Modular building system according to claim 14, comprising a hub or base station with a roof provided with one further or more first coupling frames (3), and/or comprising hydrogen storage tanks provided with a first and/or second coupling frames (3, 9).
